(19) Europäisches Patentamt
European Patent Office
Office européen des brevets

(11) Veröffentlichungsnummer: **0 428 019 A1**

# (12) EUROPÄISCHE PATENTANMELDUNG

(21) Anmeldenummer: **90120960.1**

(22) Anmeldetag: **01.11.90**

(51) Int. Cl.⁵: **C08G 75/23**, C08G 75/02

(30) Priorität: **14.11.89 DE 3937753**

(43) Veröffentlichungstag der Anmeldung:
**22.05.91 Patentblatt 91/21**

(84) Benannte Vertragsstaaten:
**BE DE FR GB IT**

(71) Anmelder: **BAYER AG**

**W-5090 Leverkusen 1 Bayerwerk(DE)**

(72) Erfinder: **Reuter, Knud, Dr.**
**Scheiblerstrasse 99**
**W-4150 Krefeld(DE)**
Erfinder: **Ebert, Wolfgang, Dr.**
**Doerperhofstrasse 31**
**W-4150 Krefeld(DE)**
Erfinder: **Weymans, Günther, Dr.**
**Koernerstrasse 5**
**W-5090 Leverkusen(DE)**

## (54) Polyethersulfon-Polyarylensulfid-Blockcopolymere sowie ein Verfahren zu ihrer Herstellung.

(57) Die Erfindung betrifft neue Polyethersulfon-Polyarylensulfid-Blockcopolymere, hergestellt aus Polyethersulfonen der allgemeinen Formel

$Y\text{-}E\text{-}(O\text{-}E'\text{-}O\text{-}E\text{-})_n\text{-}Y$

in der

Y für Halogen,

n für eine Zahl von 1 bis 100,

-E- für einen Rest der allgemeinen Formel

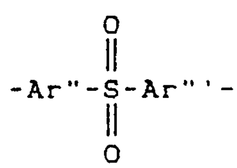

und -O-E'-O- für einen Diphenolat-Rest steht, Dihalogenaromaten und einer Schwefelquelle.

EP 0 428 019 A1

# POLYETHERSULFON-POLYARYLENSULFID-BLOCKCOPOLYMERE SOWIE EIN VERFAHREN ZU IHRER HERSTELLUNG

Die Erfindung betrifft neue Polyethersulfon-Polyarylensulfid-Blockcopolymere, hergestellt aus Polyethersulfonen mit endständigen Halogenatomen, Dihalogenaromaten und einer Schwefelquelle.

Polyarylensulfide (PAS) werden als inerte, hochtemperaturbeständige Thermoplaste, die zudem einen hohen Füllgrad mit Glasfasern oder anderen Mineralien erlauben, zunehmend interessant.

Der Einsatz dieser Polymeren, insbesondere des Polyparaphenylensulfids (PPS), nimmt besonders in Bereichen, die bislang Duromeren vorbehalten waren, wegen der einfacheren Verarbeitung zu. Hierzu zählt beispielsweise die Herstellung von elektronischen Bauteilen wie Transistoren, Kondensatoren, Mikrochips usw.

Den Anforderungen zur Umhüllung von Chips genügen vorzugsweise leichtfließende PPS-Typen. Sie haben ein verzögertes Kristallisationsverhalten und sind leicht zu verarbeiten.

Für Anwendungen von Polymeren bei hohen Temperaturen sollte eine höhere Wärmeformbeständigkeit (höhere Glasübergangstemperatur Tg) des Polymeren gegeben sein. Ein Kriechen des Polymeren bei mechanischer Belastung sollte nicht auftreten.

Der Erfindung lag die Erkenntnis zugrunde, das aus Dihalogenaromaten wie Dihalogenbenzol, besonders p-Dichlorbenzol, und speziellen Polyethersulfonen mit endständigen Halogenatomen, und Schwefelspendern hergestellte Blockcopolymere eine höhere Glasübergangstemperatur als Poly-p-phenylensulfid (Glasübergangstemperatur (Tg): 87 °C) aufweisen und einen verzogerten Einsatz der Kristallisation zeigen.

Gegenstand der Erfindung sind Blockcopolymere aus

A) von 50 bis 100 Gew.-% bevorzugt von 80 bis 100 Gew.-%, bezogen auf die Summe von A und B, Dihalogenbenzolen der Formel (I)

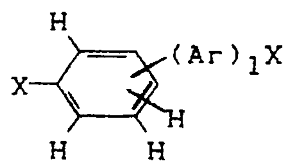

(I),

und

B) von 0 bis 50 Gew.-%, bevorzugt von 0 bis 20 Gew.-%, bezogen auf die Summe von A und B, Dihalogenaromaten, vorzugsweise Dihalogenbenzolen der Formel (II)

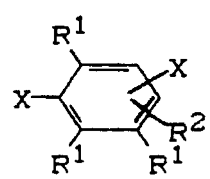

(II),

in denen

X für zueinander meta- und para-ständiges Halogen, bevorzugt Chlor oder Brom, steht und

$R^1$ und $R^2$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl bedeutet, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist,

Ar Phenylen, Carboxyphenylen oder Sulfophenylen bedeutet und

l für die Zahl 0 oder 1 steht

gegebenenfalls zusätzlich

C) von 0,01 bis 5 Mol-%, bevorzugt von 0,05 bis 2,5 Mol-%, bezogen auf 100 Mol-% ≙ Summe der Halogenaromaten (A + B + C), Tri-und Tetrahalogenaromaten der Formel (IX)

$Ar'X_p$ (IX),

in welcher

$Ar'$ ein aromatischer $C_6$-$C_{14}$-Rest oder ein heterocyclischer Rest mit 5 bis 14 Ringatomen ist, wobei bis zu 3 Ring-C-Atome durch Heteroatome wie N, O, S ersetzt sein können,

X für Halogen wie Chlor oder Brom steht und
p für die Zahl 3 oder 4 steht,
und
D) von 1 bis 50 Gew.-%, bevorzugt von 1 bis 30 Gew.-%, bezogen auf 100 Gew.-% des Blockcopolymeren bestehend aus A), B), D) und gegebenenfalls C), Polyethersulfonblöcke der Formel (III)
Y-E-(O-E′-O-E)$_n$-Y (III),
in der
Y für Halogen wie F, Cl oder Br steht,
n für eine Zahl von 1 bis 100 steht,
worin -E- ein zweibindiger Rest eines aromatischen Sulfons der Formel (IIIa)

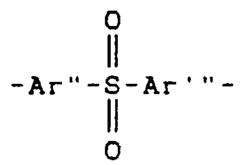

(IIIa)

in dem
Ar″ und Ar‴ gleiche oder verschiedene difunktionelle aromatische Reste mit 6 bis 50 C-Atomen, bevorzugt unabhängig voneinander p-Phenylenreste, oder mit Alkyl substituierte Phenylenreste, oder Reste der Formel

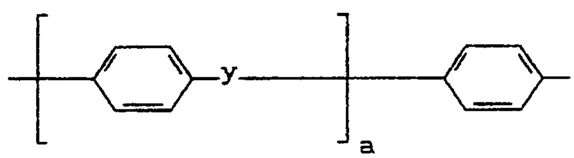

bedeuten,
worin
y für -O-, -CH$_2$-, SO$_2$-, oder eine Einfachbindung steht und
a die Zahlen 0 oder 1 bedeutet,
und worin
-O-E′-O- (IIIb)

a) zu 0 bis 90 Mol-% einen zweibindigen Diphenolat-Rest der allgemeinen Formel (X) bedeutet,

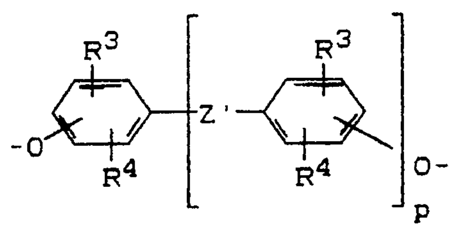

(X)

in der
$R^3$ und $R^4$ unabhängig voneinander die bei Formel (II) für $R^1$ und $R^2$ genannte Bedeutung haben,
Z′ eine chemische Einfachbindung, gegebenenfalls verzweigtes $C_{1-12}$-Alkyliden, gegebenenfalls $C_{5-20}$-Cycloalkyliden, Sauerstoff, Schwefel, SO, $SO_2$, CO bedeutet,
p für die Zahl 1 oder 0 steht und
b) zu 10 bis 100 Mol-% einen zweibindigen Diphenolat-Rest der allgemeinen Formel (IIIc)

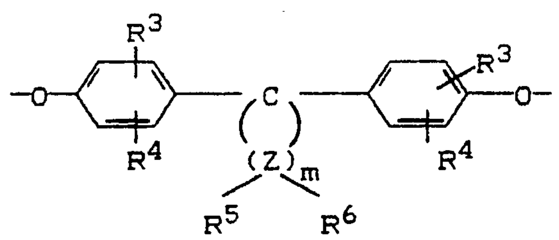

(IIIc)

bedeutet, worin
$R^3$ und $R^4$ unabhängig voneinander die bei Formel (II) für $R^1$, $R^2$ genannte Bedeutung haben und bevorzugt für H oder Methyl stehen,
m eine ganze Zahl von 4 bis 7, bevorzugt 4 oder 5 ist,
$R^5$ und $R^6$ für jedes Z individuell wählbar, unabhängig voneinander Wasserstoff oder $C_1$-$C_6$-Alkyl und Z Kohlenstoff bedeuten,
mit der Maßgabe, das an mindestens einem Atom Z die Reste $R^5$ und $R^6$ gleichzeitig Alkyl sind.

Bevorzugt sind an 1 - 2 Atomen Z, insbesondere nur an einem Atom Z, $R^5$ und $R^6$ gleichzeitig Alkyl. Bevorzugter Alkylrest ist Methyl; die Z-Atome in $\alpha$-Stellung zu dem Diphenyl-substituierten C-Atom (C-1) sind bevorzugt nicht Dialkyl-substituiert, dagegen ist die Alkyldisubstitution in $\beta$-Stellung zu C-1 bevorzugt.

Aromatische Polyethersulfone sind bekannt (siehe beispielsweise GB-PS 1 078 234, US 4 010 147 und EP-A 0 135 938). Sie können beispielsweise durch Umsetzung von Dialkalisalzen von Diphenolen mit Dihalogen-diarylsulfonen in einem polaren Lösungsmittel hergestellt werden, (siehe beispielsweise GB 1 078 234), wobei die Dialkalisalze der Diphenole auch in situ erzeugt werden können.

Die erfindungsgemäß eingesetzten Polyethersulfonblöcke können ebenfalls nach dieser Methode hergestellt werden, wobei als polares Losungsmittel bevorzugt am Stickstoff $C_1$-$C_5$-alkylsubstituiertes Caprolactam, wie N-Methyl-caprolactam, N-Ethyl-caprolactam, N-n-Propylcaprolactam, N-Isopropyl-caprolactam, vorzugsweise N-Methylcaprolactam, und vorzugsweise am Stickstoff $C_1$-$C_5$-alkylsubstituierte Pyrrolidone, wie N-Methylpyrrolidon, Cyclohexylpyrrolidon; N,N-Dimethylformamid, N,N-Dimethylacetamid, Dimethylsulfoxid, Diphenylsulfon, Sulfolan oder Tetramethylharnstoff, eingesetzt werden. Es können anteilig z.B. 0,1 bis 200 Gew.-% bezogen auf das Gewicht des polaren Lösungsmittels andere weniger polare Lösungsmittel mitverwendet werden, z.B. aromatische Kohlenwasserstoffe wie Toluol, Xylol, Mesitylen, Chlorbenzol, oder aliphatische Kohlenwasserstoffe wie Benzin, Cyclohexan.

Die Polyethersulfonblöcke (III) werden aus den entsprechenden Dihalogenarylsulfonen (IIId)

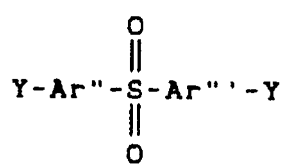

(IIId)

und den entsprechenden Bisphenolen (IIIe)

HO-E'-OH (IIIe)

hergestellt, wie z.B. in der DE-OS 38 33 385 beschrieben, wobei die Bisphenole (IIIe) vorzugsweise in Form ihrer Alkalisalze (Formel (IIIf)) eingesetzt werden.

Me-O-E'-O-Me (IIIf)

Hierin bedeutet:
Me Lithium, Natrium oder Kalium, bevorzugt Natrium oder Kalium.

Als Halogen in den Dihalogendiarylsulfonen (IIId) wird Chlor oder Fluor, insbesondere Chlor bevorzugt.

Die erfindungsgemäß eingesetzten aromatischen Polyethersulfonblöcke können bei Temperaturen von 130 bis 320 °C, bevorzugt 145 bis 280 °C und bei Drucken von 0,8 bis 10 bar, vorzugsweise von 1 bis 3 bar, insbesondere bei atmosphärischem Umgebungsdruck, hergestellt werden.

Die Menge an polaren Lösungsmitteln beträgt von 0,5 bis 50, bevorzugt von 2 bis 20 Gew.-Teile, bezogen auf 1 Gew.-Teil = Gesamtgewicht der Polyethersulfonblock-Bildungskomponenten.

Die erfindungsgemäß eingesetzten Polyethersulfonblöcke können wie folgt aus den erhaltenen Reaktionsgemischen gewonnen werden:

Man verdünnt das Reaktionsgemisch, insbesondere wenn höherviskose Lösungen vorliegen, z.B. mit

dem polaren Reaktions-Lösemittel oder einem anderen Lösungsmittel für den Polyethersulfonblock und filtriert. Nach Neutralisation des Filtrats mit einer geeigneten Säure, z.B. Essigsäure, wird der Polyethersulfonblock durch Eingießen in ein geeignetes Fällungsmedium, z.B. Wasser, Alkohole (wie z.B. Methanol, Isopropanol) oder Wasser-Alkohol-Gemische, z.B. $H_2O$/Methanol 1:1, ausgefällt, isoliert und anschließend getrocknet.

Als Bisphenolkomponenten bei der Herstellung der Polyethersulfonblöcke sind 3,3,5-Trimethyl-1,1-bis-(4-hydroxyphenyl)-cyclohexan, 3,3,5-Trimethyl-1,1-bis-(4-hydroxy-3,5-dimethylphenyl)-cyclohexan, 3,3,5,5-Tetramethyl-1,1-bis-(4-hydroxyphenyl)-cyclohexan, 3,3,5,5-Tetramethyl-1,1-bis-(4-hydroxy-2,5-dimethylphenyl)cyclohexan,3,3,5-Trimethyl-1,1-bis-(4-hydroxyphenyl)cyclopentan und 3,3,5-Trimethyl-1,1-bis-(4-hydroxy-3,5-dimethylphenyl)-cyclopentan geeignet.

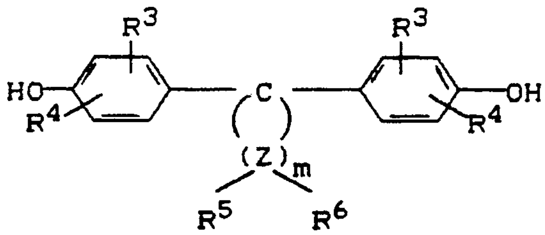

(IIIg)

Bevorzugt als Ausgangsmaterial für die Polyethersulfonblöcke sind Dihydroxydiphenylcycloalkane mit 5- und 6-Ring-C-Atomen im cycloaliphatischen Rest (m = 4 oder 5 in Formel (IIIg) wie beispielsweise die Diphenole der Formeln:

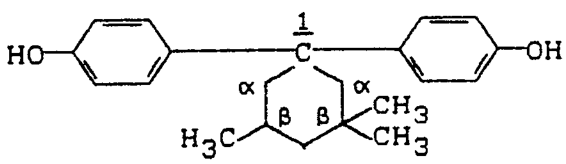

(IV),

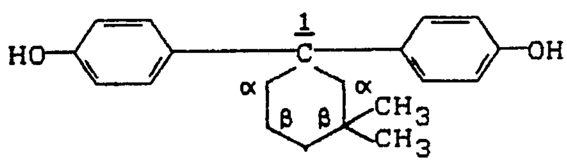

(V) und

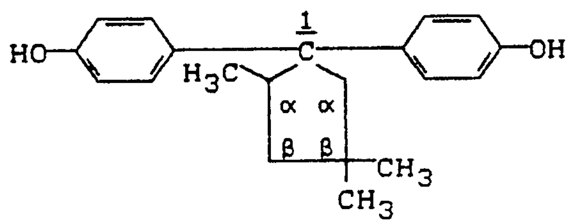

(VI),

Unter diesen ist das 1,1-Bis-(4-hydroxyphenyl)-3,3,5-trimethylcyclohexan (Formel (IV)) besonders bevorzugt.

Weitere geeignete Diphenole der Formel (IIIe) sind z.B. Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,

α,α-Bis(hydroxyphenyl)-diisopropylbenzole
sowie deren kernalkylierte und kernhalogenierte Derivate.

Diese und weitere geeignete andere Diphenole (IIIe) sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 0956, der französischen Patentschrift 1 561 518 und in der Monographie "H. Schnell, Chemistry and Physics of Polycarbonates, Interscience Publishers, New York 1964", beschrieben.

Bevorzugte andere Diphenole (IIIe) sind beispielsweise:
4,4′-Dihydroxydiphenyl,
2,2-Bis-(4-hydroxyphenyl)-propan,
2,4-Bis-(4-hydroxyphenyl)-2-methylbutan,
1,1-Bis- (4-hydroxyphenyl)-cyclohexan,
α,α′-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α′-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und
4,4′-Dihydroxydiphenylsulfon.

Sie können einzeln oder im Gemisch eingesetzt werden.

Geeignete Dihalogendiarylsulfone (Formel (IIId)) sind z.B.
4,4′-Dichlordiphenylsulfon,
4,4′-Difluordiphenylsulfon,
4-Chlor-4′-fluordiphenylsulfon,
4,4′-Dibromdiphenylsulfon,

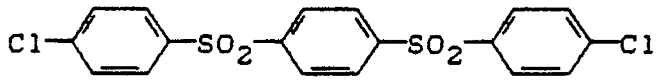,

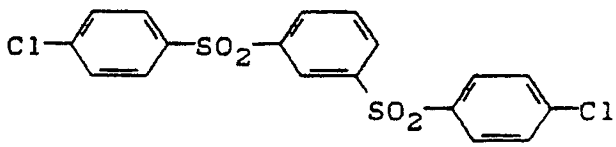,

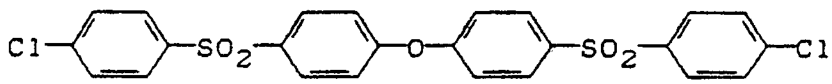,

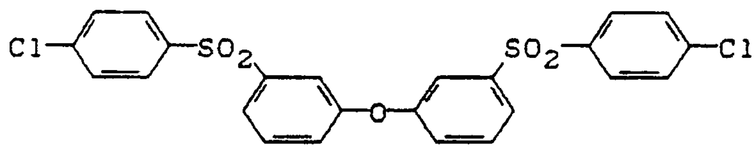 und

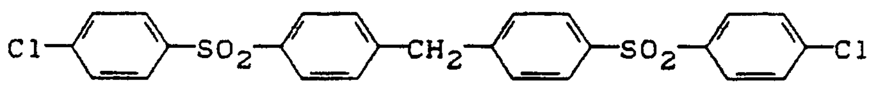 .

Dihydroxydiphenylcycloalkane der Formel (IIIg) können in an sich bekannter Weise durch Kondensation von Phenolen der Formel (VII)

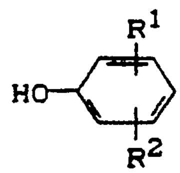

(VII)

und Ketonen der Formel (VIII)

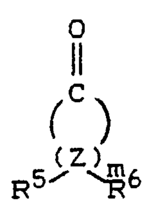

(VIII)

hergestellt werden, wobei in den Formeln (VII) und (VIII) die Reste Z, $R^3$, $R^4$, $R^5$, $R^6$ und der Index m die für Formel (IIIc) angegebene Bedeutung haben.

Die Phenole der Formel (VII) sind entweder literaturbekannt oder nach literaturbekannten Verfahren erhältlich. (Vgl. z.B. Ullmann, Encyklopädie der technischen Chemie, 4. Auflage, Band 15, S. 61-77.)

Beispiele für geeignete Phenole der Formel (VII) sind: Phenol, o-Kresol, m-Kresol, 2,6-Dimethylphenol, 2-Chlorphenol, 3-Chlorphenol, 2,6-Dichlorphenol, 2-Cyclohexylphenol, O-Phenylphenol und o- oder p-Benzylphenol.

Die Ketone der Formel (VIII) sind literaturbekannt (siehe beispielsweise Beilsteins Handbuch der

organischen Chemie, 4. Auflage, Band 7.) Ein allgemeines Verfahren zur Herstellung von Ketonen der Formel (VIII) ist beispielsweise in "Organikum" 15. Auflage 1977, VEB-Deutscher Verlag der Wissenschaften, Berlin S. 698 beschrieben.

Beispiele für geeignete Ketone der Formel (VIII) sind:

3,3-Dimethylcyclopentanon, 2,2-Dimethylcyclohexanon, 3,3-Dimethylcyclohexanon,4,4-Dimethylcyclohexanon, 3- Ethyl-3-methylcyclopentanon, 2,3,3-Trimethylcyclopentanon, 2,4,4-Trimethylcyclopentanon, 3,3,4-Trimethylcyclopentanon, 3,3-Dimethylcycloheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 2,5,5-Trimethylcyclohexanon, 3,3,5-Trimethylcyclohexanon, 3,4,4-Trimethylcyclohexanon, 2,3,3,4-Tetramethylcyclopentanon, 2,3,4,4-Tetramethylcyclopentanon, 3,3,4,4-Tetramethylcyclopentanon, 2,2,5-Trimethylcycloheptanon, 2,2,6-Trimethylcycloheptanon, 2,6,6-Trimethylcycloheptanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 2-Isopropyl-4,4-dimethylcyclopentanon, 4-Isopropyl-2,4-dimethylcyclopentanon, 2-Ethyl-3,5,5-trimethylcyclohexanon, 3-Ethyl-3,5,5-trimethylcyclohexanon, 3-Ethyl-4-isopropyl-3-methyl-cyclopentanon, 4-sec. Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.Butyl-4,4-dimethylcyclohexanon, 3-Isopropyl-3,5,5-trimethylcyclohexanon, 4-Isopropyl-3,5,5-trimethylcyclohexanon, 3,3,5-Trimethyl-5-propylcyclohexanon, 3,5,5-Trimethyl-5-propylcyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon, 5-Ethyl-2,4-diisopropyl-5-methylcyclohexanon, 2,2-Dimethylcyclooctanon, und 3,3,8-Trimethylcyclooctanon.

Beispiele für bevorzugte Ketone sind

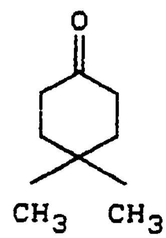

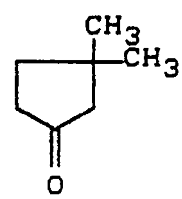

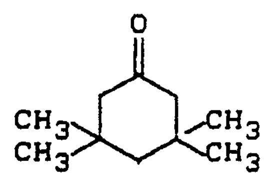

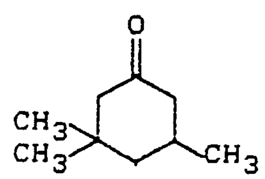

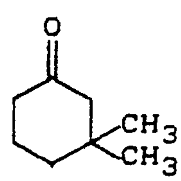

und

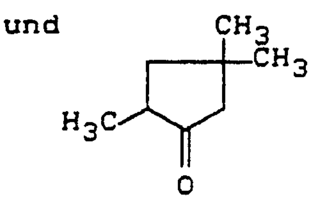

Zur Bisphenolherstellung werden im allgemeinen 2 bis 10 Mol, vorzugsweise 2,5 bis 6 Mol Phenol (VII) pro Mol Keton (VIII), verwendet. Bevorzugte Reaktionszeiten betragen 1 bis 100 Stunden. Im allgemeinen arbeitet man bei Temperaturen von -30° C bis 300° C, vorzugsweise von -15° C bis 150° C und bei Drücken von 1 bis 20 bar, vorzugsweise von 1 bis 10 bar.

Die Kondensation wird im allgemeinen in Gegenwart saurer Katalysatoren durchgeführt. Beispiele für Katalysatoren sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiterhin kann die Umsetzung durch Zugabe von Co-Katalysatoren wie $C_1$-$C_{18}$-Alkyl-Mercaptanen, Schwefelwasserstoff, Thiophenolen, Thiosäuren und Dialkylsulfiden beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzusetzen, letzteres ist jedoch zur Erzielung guter Umsätze in jedem Fall dann vorteilhaft, wenn der eingesetzte Katalysator das Reaktionswasser nicht bindet.

Geeignete wasserentziehende Mittel sind beispielsweise:
Acetanhydrid, Zeolithe, Polyphosphorsäure und Phosphorpentoxid.

Die Herstellung der Diphenole entsprechen Formel (IIIg) ist in der deutschen Patentanmeldung P 383 296.6 beschrieben.

In Formel (III) wird n bevorzugt so gewählt, daß das Molgewicht (Gewichtsmittel $M_w$) des Blocks innerhalb der Klammer von 500 bis 10 000, besonders bevorzugt von 1000 bis 6000, ergibt.

Weiterer Gegenstand der Erfindung ist ein Verfahren zur Herstellung von Blockcopolymeren, dadurch gekennzeichnet, das A) von 50 bis 100 Gew.-%, bevorzugt von 80 bis 100 Gew.-%, bezogen auf die Summe von A unb B, Dihalogenaromaten, vorzugsweise Dihalogenbenzole der Formel (I)

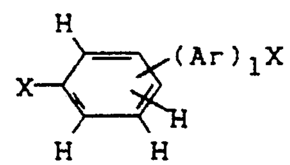

(I),

und
B) von 0 bis 50 Gew.-%, bevorzugt von 0 bis 20 Gew.-%, bezogen auf die Summe von A und B, Dihalogenaromaten, vorzugsweise Dihalogenbenzole der Formel (II)

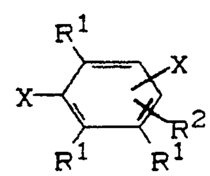

(II),

in denen
X für zueinander meta- und para-ständiges Halogen, bevorzugt Chlor oder Brom, steht und
$R^1$ und $R^2$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl bedeutet, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist
Ar Phenylen, Carboxyphenylen oder Sulfophenylen bedeutet und
l für die Zahl 0 oder 1 steht,
mit 0,5 bis 1,25 Mol Schwefelspendern wie Alkalisulfid, bevorzugt Natrium-oder Kaliumsulfid oder deren Mischung, zusammen mit 0 bis 10 Gew.% Alkalihydroxiden wie Natrium- und Kaliumhydroxid und 0 bis 045 Mol Alkalihydrogensulfid, bevorzugt Natrium- und Kaliumhydrogensulfid, oder deren Mischung, wobei das molare Verhältnis von Mol Dihalogenaromat/Mol Alkalisulfid im Bereich von 0,75:1 bis 1,25:1 liegen kann und gegebenenfalls zusätzlich C) von 0,01 bis 0,05 Mol, bevorzugt von 0,05 bis 2,5 Mol-%, bezogen auf 100 Mol-% $\hat{=}$ Summe der Halogenaromaten (A + B + C), Tri- und Tetrahalogenaromaten, vorzugsweise Tri- und Tetrahalogenbenzole der Formel (IX)
$Ar'X_p$ (IX),
in welcher
$Ar'$ ein aromatischer $C_6$-$C_{14}$-Rest oder ein heterocyclischer Rest mit 5 bis 14 Ringatomen ist, wobei bis zu 3 Ring-C-Atome durch Heteroatome wie N, O, S ersetzt sein können,
X für Halogen wie Chlor oder Brom steht und
p für die Zahl 3 oder 4 steht,
und
D) von 1 bis 50 Gew.-%, bevorzugt von 1 bis 30 Gew.-%, bezogen auf 100 Gew.-% des Blockcopolymeren bestehend aus A), B), D) und gegebenenfalls C),
Polyethersulfonblöcke der Formel (III)
$Y$-$E$-$(O$-$E'$-$O$-$E)_n$-$Y$ (III),
in der
Y für Halogen wie F, Cl, Br, bevorzugt F, Cl steht,
n für eine Zahl von 1 bis 100 steht,
worin -E- ein zweibindiger Rest eines aromatischen Sulfons der Formel (IIIa)

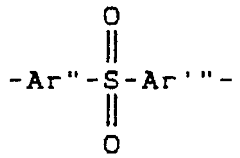

(IIIa)

in dem
Ar″ und Ar‴ gleiche oder verschiedene difunktionelle aromatische Reste mit 6 bis 50-C-Atomen, bevorzugt p-Phenylenreste,
oder mit Alkyl substituierte p-Phenylenreste, oder Reste der Formel

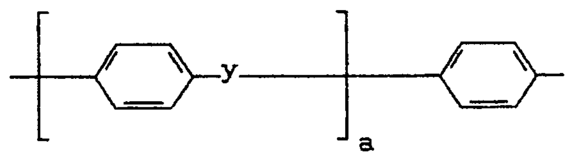

bedeuten,
worin
y für -O-, $-CH_2-$, $-SO_2-$, oder eine Einfachbindung steht und
a die Zahlen 0 oder 1 bedeutet,
und worin
-O-E′-O- (IIIb)

a) zu 0 bis 90 Mol-% einen zweibindigen Diphenolat-Rest der allgemeinen Formel (X)

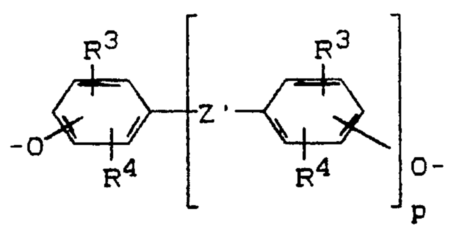

(X)

in der
$R^3$ und $R^4$ unabhängig voneinander die bei Formel (II) für $R^1$ und $R^2$ genannte Bedeutung haben,
Z′ eine chemische Einfachbindung, gegebenenfalls verzweigtes $C_{1-12}$-Alkyliden, gegebenenfalls $C_{5-20}$-Cycloalkyliden, Sauerstoff, Schwefel, SO, $SO_2$, CO bedeutet und
p für die Zahl 1 oder 0 steht und

b) zu 10 bis 100 Mol-% einen zweibindigen Diphenolat-Rest der allgemeinen Formel (IIIc)

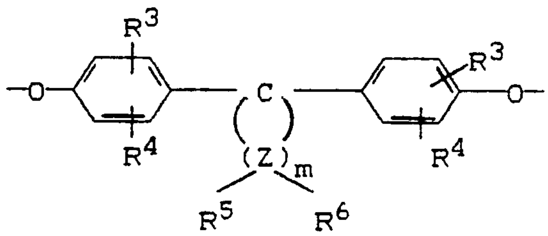

(IIIc)

bedeutet, worin
$R^3$ und $R^4$ unabhängig voneinander die bei Formel (II) für $R^1$, $R^2$ genannte Bedeutung haben und bevorzugt für H oder Methyl stehen,

m eine ganze Zahl von 4 bis 7, bevorzugt 4 oder 5 ist,

$R^5$ und $R^6$ für jedes Z individuell wählbar, unabhängig voneinander Wasserstoff oder $C_1$- bis $C_6$-Alkyl und

Z Kohlenstoff bedeuten,

mit der Maßgabe, das an mindestens einem Atom Z die Reste $R^5$ und $R^6$ gleichzeitig Alkyl sind,

gegebenenfalls in Gegenwart von Kettenreglern umgesetzt werden.

Es kommen übliche Kettenregler, z.B. Monohalogenaromaten, Monomercaptoverbindungen bzw. deren Gemische (siehe z.B. DE-A 35 29 500, 35 29 501, 35 23 498) in Frage.

Das Verfahren kann in Gegenwart von Reaktionsbeschleunigern wie Alkalicarboxylaten (z.B. NaOAc, KOAc), Alkaliphosphaten (z.B. $NaH_2PO_2$, $Na_3PO_4)_4$ Alkaliphosphonaten, Alkalifluoriden (z.B. NaF, KF), Alkalialkylsulfonaten durchgeführt werden. Weiterhin können N,N-Dialkylcarbonsäureamide, Lactame, Anhydride und Ester von Carbonsäuren zugegen sein,

Das Verfahren kann in dipolar-aprotischen Solventien wie N-Alkyllactamen durchgeführt werden, gegebenenfalls unter Mitverwendung von Cosolventien. Das molare Verhältnis von Alkalisulfiden zum Lösungsmittel liegt im Bereich von 1:2 bis 1:15.

Die Umsetzung wird bei einer Temperatur von 150 bis 300 °C durchgeführt.

Die Polyethersulfonblöcke können zusammen mit den Dihalogenaromaten dem Umsetzungsgemisch in Lösung oder in fester Form zugesetzt werden. Vorzugsweise werden sie nach der Entwässerung des Umsetzungsgemisches (z.B. aus Halogenaromaten, Schwefelspender) diesem zugesetzt. In einer besonderen Ausführungsform kann der Polyethersulfonblock nach der Polykondensationsreaktion der Dihalogenaromaten und des Schwefelspenders zugegeben werden.

Die Polyethersulfonblöcke sind bekannt oder können analog bekannter Verfahren hergestellt werden (siehe deutsche Patentanmeldung P 38 33 385), wie weiter oben ausführlicher beschrieben,

Die Herstellung der Polyethersulfon Polyarylensulfid-Blockcopolymeren kann analog der Herstellung von Polyarylensulfiden erfolgen, z.B. analog EP-A 126 369, DE-A 3 703 350, EP-A 109 637, EP-A 142 024, EP-A 171 021, US-A 3 354 129 usw.

Die Alkalisulfide, z.B. $Na_2S$, $K_2S$, als Schwefelspender, werden vorzugsweise in Form ihrer Hydrate und wäßrigen Mischungen oder wäßrigen Losungen eingesetzt. Die Entwässerung kann partiell sein, erfolgt aber vorzugsweise vollständig. Das im Umsetzungsgemisch vorhandene Wasser wird aus dem Ansatz destilliert. Die Wasserdestillation kann direkt oder mit Hilfe von Azeotropbildnern, wobei bevorzugt als Azeotropbildner die Dihalogenaromaten eingesetzt werden, erfolgen. Für die Entwässerung können alle Reaktionspartner gemischt werden und dann die Entwässerung des Gesamtgemisches durchgeführt werden. Das Alkalisulfid kann auch separat mit einem Teil der Reaktionskomponenten oder alleine entwässert werden.

In einer Ausführungsform der Reaktion werden die Reaktionspartner zusammen mit dem Reaktionsbeschleuniger bzw. einem Gemisch von Reaktionsbeschleunigern in Anwesenheit des polaren Lösungsmittels kontinuierlich unter gleichzeitiger Entfernung des Wassers zusammengeführt. Bei dieser Verfahrensweise kann eine einsetzende Umsetzung über die Dosierungsraten gesteuert werden. Längere Verweilzeiten des Wassers können so auch vermieden werden.

Wird völlig entwässert, so kann druckfrei bzw. druckarm bis zu ca. 3 bar Druck umgesetzt werden. Zur Erzielung von höheren Reaktionstemperaturen über den Siedepunkt des Lösungsmittels bzw. der Mischung aus Lösungsmittel und Di- und Polyhalogenaromaten hinaus kann höherer Druck bis zu 50 bar angewendet werden.

Die Reaktion kann kontinuierlich und diskontinuierlich durchgeführt werden. Die Reaktionszeit kann innerhalb einer weiten Spanne variiert werden, Sie kann von 1 bis 48 Stunden, bevorzugt 1 bis 18 Stunden, betragen. Die Reaktionstemperaturen liegen zwischen 150 und 300 °C, vorzugsweise zwischen 170 und 280 °C.

Die Zugabe des Polyethersulfonblockes (PES) kann in verschiedener Art und Weise erfolgen. So kann z.B. der PES-Block vorgelegt werden oder während der Entwässerung in Lösung zugesetzt werden oder vorzugsweise nach der Entwässerung in Lösung, in dem bei der Reaktion verwendeten Lösungsmittel zugesetzt werden, Es können Gemische aus verschiedenen PES-Blöcken verwendet werden.

Die Aufarbeitung des Umsetzungsgemisches und die Isolierung der Blockcopolyarylensulfide können in bekannter Weise erfolgen.

Das Blockcopolyarylensulfid kann direkt aus der Reaktionslösung oder erst z.B. nach Zugabe von Wasser und/oder verdünnten Säuren oder organischen Lösungsmitteln mit geringer Löslichkeit für Polyarylensulfide nach üblichen Verfahrensweise abgetrennt werden, beispielsweise durch Filtration oder durch Zentrifugieren. Nach der Abtrennung des Blockcopolyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Blockcopolyarylensulfid kann auch beispielsweise durch Abdestillieren des Lösungsmittels und eine anschließende Wäsche, wie oben beschrieben, gewonnen werden.

Die Alkalisulfide als Schwefelspender können z.B. auch aus $H_2S$ und den Alkalihydroxiden erhalten werden.

Je nach Anteil an Alkalihydrogensulfid (z.B. NaHS, KHS), das als Verunreinigung im Alkalisulfid in der Reaktionslösung enthalten sein kann, können zusätzlich bestimmte Anteile Alkalihydroxid (z.B. NaOH, KOH) zudosiert werden. Gegebenenfalls können auch anstelle der Alkalihydroxide solche Verbindungen zugegeben werden, die unter den Reaktionsbedingungen Alkalihydroxide abspalten bzw. bilden.

Erfindungsgemäß können meta- und para-Dihalogenaromaten der Formel (I) bzw. (II) eingesetzt werden. In diesem Fall kann das Verhältnis meta- zu para-Dihalogenaromaten bis zu 30:70 betragen.

Vorzugsweise werden p-Dihalogenaromaten wie p-Dichlorbenzol, p-Dibrombenzol eingesetzt.

Sollen verzweigte Polyarylensulfid/PES-Blockcopolymere hergestellt werden, sollten mindestens 0,0005 Mol-%, bezogen auf 1 Mol-% der Summe der Halogenaromaten (A + B + C), eines Tri- oder Tetrahalogenaromaten der Formel (IX) eingesetzt werden.

Beispiele für erfindungsgemäß einzusetzende Dihalogenaromaten der Formel (I) sind: p-Dichlorbenzol, p-Dibrombenzol, 1-Chlor-4-brombenzol,1,3-Dichlorbenzol, 1,3-Dibrombenzol, 1-Chlor-3-brombenzol, 4,4′-Dichlordiphenyl, 4,4′-Dichlordiphenylsulfon, 4,4′-Difluordiphenylsulfon, 4,4′-Difluorbenzophenon, 4,4′-Dichlorbenzophenon. Sie sind allein oder im Gemisch miteinander verwendbar. Besonders bevorzugt sind 1,4-Dichlorbenzol und 1,4-Dibrombenzol.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,4-dichlorbenzol, 1-Phenyl-2,5-dibrombenzol, 1-p-Tolyl-2,5- dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Beispiele für erfindungsgemäß einzusetzende Tri- bzw. Tetrahalogenaromaten der Formel (IX) sind: 1,2,3-Trichlorbenzol, 1,2,4-Trichlorbenzol, 1,2,4-Tribrombenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2′,4,4′-Tetrachlorbiphenyl, 2,4,6-Trichlor-1,3,5-triazin, 1,3,5-Tris(4-chlorphenyl)benzol u.s.w.

Generell kann jedes polare Lösungsmittel für die Reaktion eingesetzt werden, das eine ausreichende Löslichkeit der organischen und gegebenenfalls anorganischen Reaktanden unter den Reaktionsbedingungen gewährleistet. Bevorzugt werden N-Alkyllactame verwendet.

N-Alkyllactame sind solche von Aminosäuren mit 3 bis 11 C-Atomen, die gegebenenfalls Substituenten am Kohlenstoffgerüst tragen können, die unter Reaktionsbedingungen inert sind.

Beispielsweise finden als N-Alkyllactame Verwendung:

N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2- pyrrolidon, N-Ethyl-Z-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Methyl-2,4,5-trimethyl-2-pyrrolidon, N-Methyl-2-piperidon, N-Ethyl-2-piperidon, N-Isobutyl-2-piperidon, N-Methyl-6-methyl-2-piperidon, N-methyl-3-ethyl-2-piperidon.

Es können Mischungen der vorstehenden Lösungsmittel gewählt werden.

Als Kettenabbrecher verwendbare Monohalogen- oder Monomercaptoverbindungen sind z.B.:

3-Chlordiphenyl, 3-Bromdiphenyl, 4-Chlordiphenyl, 4-Bromdiphenyl, 3-Chlordiphenylsulfid, 3-Bromdiphenylsulfid, 4-Chlordiphenylsulfid, 4-Bromdiphenylsulfid, 3-Chlordiphenylsulfon, 3-Bromdiphenylsulfon, 4-Chlordiphenylsulfon, 4-Bromdiphenylsulfon, 3-Chlordiphenylketon, (3-Bromphenyl)phenylketon, (4-Chlorphenyl)-phenylketon, (4-Bromphenyl)phenylketon, Mercaptane wie Butylmercaptan, Dodecylmercaptan, Stearylmercaptan, Benzylmercaptan, Thiophenol, 1-Mercaptonaphthalin, 2-Mercaptonaphthalin, 4-Mercaptodiphenyl, 4-Mercaptodiphenylether, 4-Mercaptodiphenylsulfon, 4-Mercaptodiphenylsulfid, 4-Mercaptodiphenylketon, 2-Mercaptobenzooxazol, 2-Mercaptobenzthiazol, 2-Mercaptobenzimidazol sowie deren Alkalisalze (z.B. Li-, Na-, K-, $NH_4$-mercaptide), Erdalkalisalze (z.B. Ca-, Mg- oder Zn-Mercaptide).

Weitere Verbindungen, die als Kettenabbrecher geeignet sind, sind z.B. Phenole, wie in EP-A 229 626 beschrieben.

Die Reaktion kann gegebenenfalls zusätzlich in Anwesenheit von üblichen Reaktionsbeschleunigern wie z.B. Alkalicarboxylaten (DE-A 2 453 749), Lithiumhalogeniden oder Alkalicarboxylaten (DE-A 2 623 362), Lithiumchlorid oder Lithiumcarboxylat (DE-A 2 623 363), Alkalicarbonaten in Kombination mit Alkalicarboxylaten (US-A 4 038 259), Lithiumacetat (DE-A 2 623 333), Trialkaliphosphaten (DE-A 2 930 710), Trialkaliphosphonaten (DE-A 2 930 797), Alkalifluoriden (DE-A 3 019 732), Alkalisulfonaten (US-A 4 038 260),

Lithiumcarbonat und Lithiumborat (US-A 4 030 518), Aminosäuren, definierten Mengen Lactamen, Anhydriden und Estern von Carbonsäuren (z.B. EP-A 171 021) und N,N-Dialkylcarbonsäureamiden durchgeführt werden.

Die neuen Polyarylensulfidblockcopolymeren zeichnen sich durch höhere Glastemperaturen und später einsetzende Kristallisation der Schmelzen aus.

Die erfindungsgemäßen Polyarylensulfid-Blockcopolymeren können mit anderen Polymeren, vorzugsweise PPS, Polysulfonen und Polyetherketonen, gemischt werden. Übliche Zusatzstoffe wie Pigmente und Füllstoffe - beispielsweise Graphit, Metallpulver, Metalloxide, Glaspulver, Quarzmehl, Talkum, Glasfasern oder Kohlefasern, für Polyarylensulfide übliche Additive, beispielsweise übliche Stabilisatoren oder Entformungsmittel, können zugemischt werden.

Im allgemeinen wird das Schmelzfließverhalten von Polyarylensulfiden nach ASTM 1238-70 bei 316 °C unter Verwendung eines 5-kg-Gewichtes gemessen und in g/10 min angegeben. Dieses Verfahren wurde ebenfalls zur Bestimmung des Schmelzfließverhaltens der neuen Polyarylensulfid-Polyethersulfon-Blockcopolymeren herangezogen.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\eta m$ der Polymerschmelze (in Pa.s) bei 306 °C in Abhängigkeit von der Schubspannung (in Pa) mit Hilfe des Instron-Rotationsviskosimeters bestimmt.

Man kann auf diese Weise die Schmelzviskosität in einem sehr weiten Bereich von $10^{-1}$ bis $10^{7}$ Pa.s bestimmen. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden, Verwendet wurde das Rheometer Modell 3250 der Firma Instron, Durchmesser des Kegels und der Platte 2 cm. Angegeben wird die Schmelzviskosität, die bei einer Schubspannung von $\tau$ = $10^2$ Pa gemessen wird.

Die erfindungsgemäßen Blockcopolymere besitzen nach der Isolierung aus dem Reaktionsgemisch Schmelzviskositäten von 1 bis 5 x $10^3$ Pa.s, vorzugsweise von 5 bis 1 x $10^3$ Pa.s. Sie können in der üblichen Weise verarbeitet werden, z.B. zu Folien oder Fasern, und als Spritzgußmassen verwendet werden. Diese können Verwendung finden z.B. als Automobilteile, Armaturen, Elektroteile (z.B. Schalter), elektronische Tafeln, Leiterplatten, chemikalienresistente und witterungsstabile Teile und Apparate wie Pumpengehäuse und Pumpenflügelräder, Ätzbadschalen, Dichtungsringe, Teile von Büromaschinen und Fernmeldeeinrichtungen sowie als Haushaltsgeräte, Ventile, Kugellagerteile, Einbettmassen für elektronische Bauteile etc.

Polyarylensulfide können über chromatographische Verfahren analysiert werden, um Aussagen über Molekulargewicht und Molekulargewichtsverteilungzu machen.

Hierfür sind z.B. Hochdruckflüssigkeitschromatographie (HPLC) oder Gelpermeationschromatographie (GPC) geeignet.

## Beispiele

### Allgemeine Arbeitsvorschrift

Man legt 489,2 g (3,33 Mol) p-Dichlorbenzol und 2,15 l N-Methylcaprolactam in einem 5 l-Stahlkessel vor, erhitzt auf 215 °C und tropft ein Gemisch aus 919,5 g (7,16 Mol) Natriumsulfidtrihydrat, 260 g Wasser, 3,5 g (0,0875 Mol) Natriumhydroxid und 112,9 g (0,88 Mol) $\epsilon$Caprolactam so zu, daß die Sumpftemperatur bei 215 °C bleibt. Dabei destilliert das zugesetzte Wasser und das Hydratwasser ab. Während der Natriumsulfidzugabe werden 489,2 g (3,33 Mol) p-Dichlorbenzol zugetropft. Die Zugabedauer beträgt 4 Stunden. Nach 2 Stunden Nachrührzeit wird der PES-Block, gelöst in 400 ml N-Methylcaprolactam, zugesetzt. Anschließend wird noch 7 Stunden auf 240 °C erhitzt und der Inhalt des 5 l-Kessels in 40 l Isopropanol abgelassen. Nach Ansäuern auf pH 1 filtriert man das ausgefallene Polymer ab und wäscht mit destilliertem Waser elektrolytfrei. Das Polymer wird im Vakuum 24 Stunden bei 110 °C getrocknet.

Als charakteristische physikalische Eigenschafen wurde die Glastemperatur Tg, die Rekristallisationstemperatur bei Wiederabkühlen $T_k$ und die Schmelzenthalpie $H_k$ durch DSC-Messungen bestimmt.

### Beispiel 1

Zugesetzt wurden 40 g eines PES-Blocks basierend auf 4,4′-Dichlordiphenylsulfon und 1,1-Bis-(4-hydroxyphenyl)-3,3,5-trimethylcyclohexan.
Chlorgehalt: 3,3 % (n = 4);
Ausbeute: 684,3 g;
Schmelzviskosität $\eta_{melt}$: 45 Pa.s;
Glasübergangstemperatur Tg: 90 °C;
Kristallisationstemperatur $T_k$ = 235-204 °C;
Kristallisationsenthalpie $\Delta H_k$ = 45 g/J.

Beispiel 2

Wie in Beispiel 1, zugesetzt wurden jedoch 80 g des PES-Blocks (Chlorgehalt: = 3,3 %).
Ausbeute: 682,7 g;
Schmelzviskosität $\eta_{melt}$: 24 Pa.s;
Glasübergangstemperatur Tg: 92 °C; Kristallisationstemperatur $T_k$ = 235-208 °C;
Kristallisationsenthalpie $\Delta H_k$ = 47 g/J.

## Ansprüche

1. Blockcopolymere aus
A) von 50 bis 100 Gew.-%, bezogen auf die Summe von A und B, Dihalogenaromaten der Formel (I)

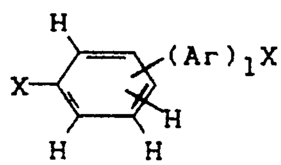

(I),

und
B) von 0 bis 50 Gew.-%, bezogen auf die Summe von A und B, Dihalogenaromaten der Formel (II)

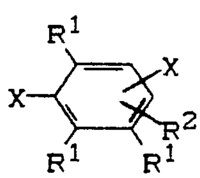

(II),

in denen
X für zueinander meta- und para-ständiges Halogen und
$R^1$ und $R^2$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl bedeutet, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist
Ar Phenylen, Carboxyphenylen oder Sulfophenylen bedeutet und
l für die Zahl 0 oder 1 steht
und gegebenenfalls zusätzlich
C) von 0,01 bis 5 Mol-%, bezogen auf 100 Mol-% ≙ Summe der Halogenaromaten (A + B + C), Tri- und Tetrahalogenaromaten der Formel (IX)
$Ar'X_p$ (IX),
in welcher
Ar′ ein aromatischer $C_6$-$C_{14}$-Rest oder ein heterocyclischer Rest mit 5 bis 14 Ringatomen ist, wobei bis zu 3 Ring-C-Atome durch Heteroatome wie N, O, S ersetzt sein können,
X für Halogen wie Chlor oder Brom steht und
p für die Zahl 3 oder 4 steht,

und
D) von 1 bis 50 Gew.-%, bezogen auf 100 Gew.-% des Blockcopolymeren bestehend aus A), B), D) und gegebenenfalls C), Polyethersulfonblöcke der Formel (III)

Y-E-(O-E′-O-E)$_n$-Y (III)

in der
Y für Halogen wie F, Cl oder Br steht,
n für eine Zahl von 1 bis 100 steht,
-E- ein zweibindiger Rest eines aromatischen Sulfons der Formel (IIIa)

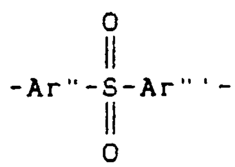

(IIIa)

in dem
Ar″ und Ar‴ gleiche oder verschiedene difunktionelle aromatische Reste mit 6 bis 50 C-Atomen bedeuten,
in der weiterhin

-O-E′-O- (IIIb)

a) zu 0 bis 90 Mol-% einen zweibindigen Diphenolat-Rest der allgemeinen Formel (X) bedeutet,

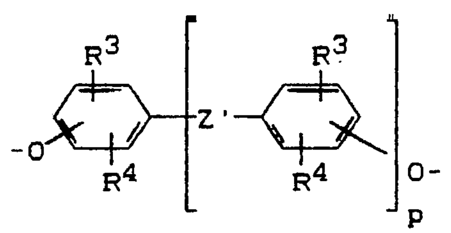

(X)

in der
$R^3$ und $R^4$ unabhängig voneinander die bei Formel (II) für $R^1$ und $R^2$ genannte Bedeutung haben,
Z′ eine chemische Einfachbindung, gegebenenfalls verzweigtes $C_{1-12}$-Alkyliden, gegebenenfalls $C_{5-20}$-Cycloalkyliden, Sauerstoff, Schwefel, SO, $SO_2$, CO bedeutet und
p für die Zahl 1 oder 0 steht und
b) zu 10 bis 100 Mol-% einen zweibindigen Diphenolat-Rest der allgemeinen Formel (IIIc)

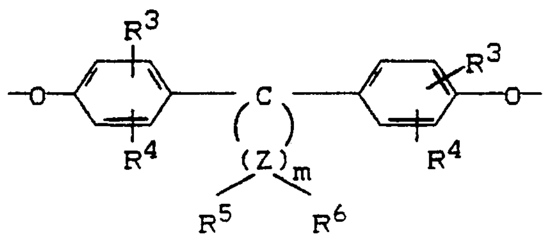

(IIIc)

bedeutet, worin
$R^3$ und $R^4$ unabhängig voneinander die bei Formel (II) für $R^1$, $R^2$ genannte Bedeutung haben,
m eine ganze Zahl von 4 bis 7 ist,
$R^5$ und $R^6$ für jedes Z individuell wählbar, unabhängig voneinander Wasserstoff oder $C_1$- bis $C_6$-Alkyl und
Z Kohlenstoff bedeuten,
mit der Maßgabe, daß an mindestens einem Atom Z die Reste $R^5$ und $R^6$ gleichzeitig Alkyl sind.

2. Verfahren zur Herstellung von Polyarylensulfidblockcopolymeren, dadurch gekennzeichnet, daß man
A) von 50 bis 100 Gew.-%, bezogen auf die Summe von A und B, Dihalogenatomen der allgemeinen

Formel (I)

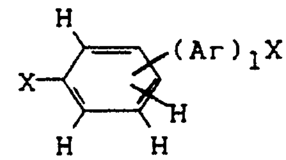

(I),

und

B) von 0 bis 50 Gew.-%, bezogen auf die Summe von A und B, Dihalogenaromaten der Formel (II)

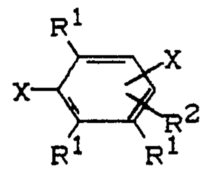

(II),

in denen

X für zueinander meta- und para-ständiges Halogen und

$R^1$ und $R^2$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{10}$-Alkylaryl, $C_7$-$C_{14}$-Arylalkyl bedeutet, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist

Ar Phenylen, Carboxyphenylen oder Sulfophenylen bedeutet und

l für die Zahl 0 oder 1 steht,

mit 0,5 bis 1,25 Mol Schwefelspendern wie Alkalisulfid, zusammen mit 0 bis 10 Gew.% Alkalihydroxiden wie Natrium-und Kaliumhydroxid und 0 bis 0,5 Mol Alkalihydrogensulfid, wobei das molare Verhältnis von Mol Dihalogenaromat/Mol Alkalisulfid im Bereich von 0,75:1 bis 1,25:1 liegen kann,

und gegebenenfalls zusätzlich

C) von 0,01 bis 5 Mol-%, bezogen auf 100 Mol-% der Summe der Halogenaromaten (A + B + C), Tri- und Tetrahalogenaromaten der Formel (IX)

$Ar'X_p$ (IX),

in welcher

$Ar'$ ein aromatischer $C_6$-$C_{14}$-Rest oder ein heterocyclischer Rest mit 5 bis 14 Ringatomen ist, wobei bis zu 3 Ring-C-Atome durch Heteroatome wie N, O, S ersetzt sein können,

X für Halogen wie Chlor oder Brom steht und

p für die Zahl 3 oder 4 steht,

und

D) von 1 bis 50 Gew.-%, bezogen auf 100 Gew.-% des Blockcopolymeren bestehend aus A), B), D) und gegebenenfalls C), Polyethersulfonblöcke der Formel (III)

$Y\text{-}E\text{-}(O\text{-}E'\text{-}O\text{-}E))_n\text{-}Y$ (III),

in der

Y für Halogen wie F, Cl, Br, bevorzugt F, Cl steht,

n für eine Zahl von 1 bis 100 steht,

-E- ein zweibindiger Rest eines aromatischen Sulfons der Formel (IIIa)

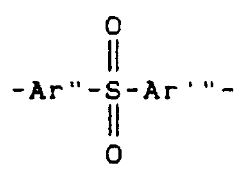

(IIIa)

in dem

$Ar''$ und $Ar'''$ gleiche oder verschiedene difunktionelle aromatische Reste mit 6 bis 50 C-Atomen, bedeuten,

in der weiterhin
-O-E'-O- (IIIb)
a) zu 0 bis 90 Mol-% einen zweibindigen Diphenolat-Rest der allgemeinen Formel (X)

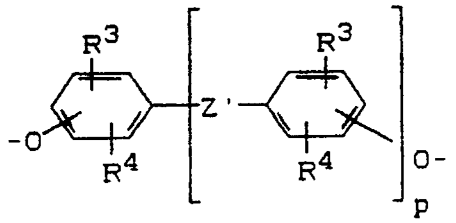

(X)

in der
$R^3$ und $R^4$ unabhängig voneinander die bei Formel (II) für $R^1$ und $R^2$ genannte Bedeutung haben,
Z' eine chemische Einfachbindung, gegebenenfalls verzweigtes $C_{1-12}$-Alkyliden, gegebenenfalls $C_{5-20}$-Cycloalkyliden, Sauerstoff, Schwefel, SO, $SO_2$, CO bedeutet.
und
p für die Zahl 1 oder 0 steht und
b) zu 10 bis 100 Mol-% einen zweibindigen Diphenolat-Rest der allgemeinen Formel (IIIC)

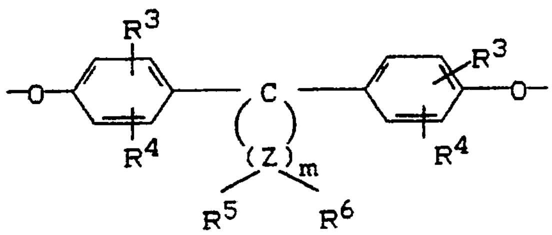

(IIIc)

bedeutet, worin
$R^3$ und $R^4$ unabhängig voneinander die bei Formel (II) für $R^1$, $R^2$ genannte Bedeutung haben,
m eine ganze Zahl von 4 bis 7 ist,
$R^5$ und $R^6$ für jedes Z individuell wählbar, unabhängig voneinander Wasserstoff oder $C_1$- bis $C_6$-Alkyl und
Z Kohlenstoff bedeuten,
mit der Maßgabe, daß an mindestens einem Atom Z die Reste $R^5$ und $R^6$ gleichzeitig Alkyl sind,
gegebenenfalls in Gegenwart von Kettenreglern umgesetzt werden.

3. Verwendung von Blockcopolymeren nach Anspruch 1 zur Herstellung geformter Körper.

Europäisches Patentamt

# EUROPÄISCHER RECHERCHENBERICHT

Nummer der Anmeldung

**EP 90 12 0960**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 237 593 (ASAHI GLASS COMPANY LTD.)<br>* Anspruch 1 *<br>– – – | 1-3 | C 08 G 75/23<br>C 08 G 75/02 |
| X,P | EP-A-0 352 798 (ASAHI GLASS COMPANY LTD.)<br>* Seite 12, Beispiel 1 *<br>– – – | 1-2 | |
| A | EP-A-0 243 831 (BASF AKTIENGESELLSCHAFT)<br>* Anspruch 1 *<br>– – – – – | 1 | |

| RECHERCHIERTE SACHGEBIETE (Int. Cl.5) |
|---|
| C 08 G |

Der vorliegende Recherchenbericht wurde für alle Patentansprüche erstellt

| Recherchenort | Abschlußdatum der Recherche | Prüfer |
|---|---|---|
| Den Haag | 11 März 91 | PRAS J-L.C.N. |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument